# EUROPEAN PATENT APPLICATION

(11) **EP 2 083 361 A1**
(43) Date of publication of application: **29.07.2009**
(21) Application number: 08001335.2
(22) Date of filing: 24.01.2008
(51) Int. Cl.: G06F 17/30

(54) **Searching method based on a problem/function-defined interface for a patent database system**

(71) Applicant: Sunonwealth Electric Machine Industry Co., Ltd., Kaohsiung City (TW)
(72) Inventor: Horng, Alex, Ling Ya District, Kaohsiung City (TW); Huang, Chung-Jen, Ling Ya District, Kaohsiung City (TW)
(74) Representative: Kador & Partner

(57) **Abstract**

A searching method based on a problem/function-defined interface includes the steps of: providing at least one computer system and at least one patent database system, the patent database system including a plurality of patent brief forms; operating the computer system to access a problem/function-defined search interface to select at least one first hyperlink block which includes a plurality of problem/function query sections, and to sift the patent brief forms relating to the selected problem/function sections; accessing a detailed list interface depending upon results sifted from the problem/function query sections, so as to select at least one of second hyperlink block which includes a plurality of representative sections; generating search results of the patent brief forms.

## Description

### BACKGROUND OF THE INVENTION

### 1. Field of the Invention

The present invention relates to a searching method based on a problem/function-defined interface for a patent database system. More particularly, the present invention relates to the searching method employing a problem/function-defined search interface to determine and to reduce the scope of a user-defined search in the patent database system.

### 2. Description of the Related Art

Currently, a patent search tool provided in many official patent offices has applied a client/server model which can be searched by entering a key word (i.e. user's search term) such as a key word of title, a filing date, a patented date or an applicant name via connecting a user to a server. Accordingly, the search results will be generated.

A conventional searching method for a patent database, as described in Taiwanese Patent Publication No. I221992, entitled "SEARCHING METHOD FOR PATENT DOCUMENT," is applied to a computer system which contains a patent document database. In a data-searching operation, a user can input at least one keyword or a piece of information into the computer system that can automatically generate a set of search results of patent documents in relation to the keyword. The searching method comprises the steps of: comparing the input keyword with a keyword-category comprehensive table which is stored in the computer system, and contains plural technical categories and plural related characteristic terms corresponding to each of the technical categories; according to compared results, analyzing at least one or more possible technical categories from contents of the keyword-category comprehensive table so as to determine a list of selected technical categories; according to the input keyword, processing a search for matches in the patent documents corresponding to the selected technical categories; and displaying the determined patent documents in response to search results. In this manner, the step of comparing the input keyword with the keyword-category comprehensive table can exclude the patent documents having a redundancy or irrelevancy of information. There is still a need for improvement in both the speed of searching and the correctness of search results.

However, this conventional searching method has several drawbacks as discussed in detail below. In particular, for example, this method is unsuitable for a new or unexperienced user in data searching due to the fact that an unskilled selection in determining correct technical terms of the keywords naturally occurs during use of the patent document database. Disadvantageously, this may result in difficulties in selecting proper keywords, and lower the efficiency in a data searching operation.

Another problem naturally occurring during use of such a searching method is due to the fact that the vastness of technical terms may cause users to receive a redundancy of undesired information of search results that are not relevant to the user-defined technical categories. Accordingly, such classification of the keyword-category comprehensive table provided in the patent document database is susceptible to a good possibility of retrieving incorrect search results. Disadvantageously, there is an increase of the possibility of incorrect search results by using such a searching method. In addition to this, a vast number of the search results are given in a search list generated from the computer system. Inevitably, the user must open each of the selected patent documents, including patent names, claims and drawings, to identify matches for the user-defined search rather than to browse through contents of the selected patent documents. However, there is a need for the user to find out irrelevant patent documents from the search results one by one that constitutes a longer period of searching time as well as a greater amount of wasting time that is undesirable.

In attempting to solve the problem with an uneasy manner of studying the patent document for the unexperienced user, the contents of patent documents must be summarized to provide brief information of the patents by professionals. These brief information of the patents are previously stored in a patent database system for practicing a search of the user. For example, a conventional patent database system, as described in Taiwanese Patent Publication No. I22048, entitled "COMPUTER-AID ANALYZING METHOD FOR PATENT DOCUMENT AND SYSTEM THEREOF," employs computer software, electronic spreadsheets and database software for analyzing contents of patent documents and generating patent summary in the form of lists or diagrams for reference.

This conventional searching method for the user is designed to search the database in which previously stored the patent summary lists or diagrams such that the method enable the users to rapidly and conveniently conduct a search query in the database. However, a number of problems exist for the users during use of this conventional searching method. For example, this conventional searching method is not designed for the user using a search keyword expressing technical problem or functional technique. The user must enter a broaden search term (e.g. fan motor) for satisfying the user's search scope relating to a technical issue or a functional problem (e.g. rotational balancing problem) in the entire technical field due to the fact that each of the patent documents does not indicate a specific term for describing technical issues or functional problems. Inevitably, the broaden search term may result in a vast number of the search results. This searching type normally takes a long time to process the entire procedure and then a longer time to interpret the search results. Conversely, if the user enters a technical/functional-problem-defined (i.e. narrowed) search term which directly expresses a technical issue or a functional problem, the search result will not contain the patent documents that describe the technical issue in a manner that does not use such a user-defined search term to describe the technical issue or functional problem.

In brief, practicing the conventional searching method cannot narrow the user's search scope in advance by entering a technical/functional-problem-defined search term, and some or many of the search results cannot meet the user-defined search relating to the designated technical issue or functional problem. This may result in a low efficiency and a low accuracy for data searching, and a waste of searching time. Hence, there is a need for improving such a conventional searching method for the patent database system.

As is described in greater detail below, the present invention intends to provide a problem/function-oriented searching method for a patent database system. The problem/function-oriented searching method accesses at least one patent database system in which a plurality of patent brief forms are stored. A problem/function-defined search interface is hyper-linked to process a patent searching operation, so as to generate search results of the patent brief forms. The searching method is successful in reducing data-searching time by means of the problem/function-defined search interface in such a way as to mitigate and overcome the above problem.

### SUMMARY OF THE INVENTION

The primary objective of this invention is to provide a searching method based on a problem/function-defined interface for a patent database system. The problem/function-oriented searching method is implemented by accessing a problem/function-defined search interface via a hyperlink, so as to reduce the scope of a user-defined search in the patent database system. Accordingly, the searching method can enhance the efficiency and accuracy in data searching.

The secondary objective of this invention is to provide a searching method based on a problem/function-defined interface for generating a brief form of search results from a patent database. The problem/function-oriented searching method is implemented by hyper-linking a problem/function-defined search interface to link a detailed list interface, so as to generate search results of the brief form from the patent database. Accordingly, the searching method can achieve a reduced searching time for users.

Another objective of this invention is to provide the searching method based on a problem/function-defined interface for generating a brief form of search results from a patent database. The searching method based on a problem/function-defined interface can access the detailed list interface to enter or does not to access a classification list interface, so as to further reduce the scope of a user-defined search in the patent database system. Accordingly, the searching method can enhance the efficiency and accuracy in data searching.

The searching method in accordance with an aspect of the present invention includes the steps of: arranging at least one computer system and at least one patent database system provided therein, the patent database system including a plurality of patent brief forms; operating the computer system to access a problem/function-defined search interface to select at least one first hyperlink block which includes a plurality of problem/function query sections, and to sift the patent brief forms relating to the selected problem/function sections; accessing a detailed list interface depending upon results sifted from the problem/function query sections, so as to select at least one of second hyperlink block which includes a plurality of representative sections; generating search results of the patent brief forms.

In a separate invention includes the steps of: selecting a third hyperlink block of the detailed list interface to link a classification list interface and selecting at least one fourth hyperlink block of an element-name classification list to generate search results of the patent brief forms.

Further scope of the applicability of the present invention will become apparent from the detailed description given hereinafter. However, it should be understood that the detailed description and specific examples, while indicating preferred embodiments of the invention, are given by way of illustration only, since various will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
FIG. 1 is a block diagram illustrating a searching method based on a problem/function-defined interface for a patent database system in accordance with a preferred embodiment of the present invention;
FIG. 2 is a flow chart illustrating the searching method based on a problem/function-defined interface for the patent database system in accordance with a preferred embodiment of the present invention;
FIG. 3 is a schematic view illustrating a patent brief form generated from the patent database system in accordance with a preferred embodiment of the present invention;
FIG. 4 is a schematic view illustrating a problem/function-defined search interface stored in the patent database system in accordance with a preferred embodiment of the present invention;
FIG. 5 is a schematic view illustrating a detailed list interface stored in the patent database system in accordance with a preferred embodiment of the present invention;
FIG. 6 is a schematic view illustrating a classification list interface stored in the patent database system in accordance with a preferred embodiment of the present invention; and
FIGS. 7A-7C are schematic views illustrating a brief form in the patent database system generated by the problem/function-oriented searching method in accordance with a preferred embodiment of the present invention.

### DETAILED DESCRIPTION OF THE INVENTION

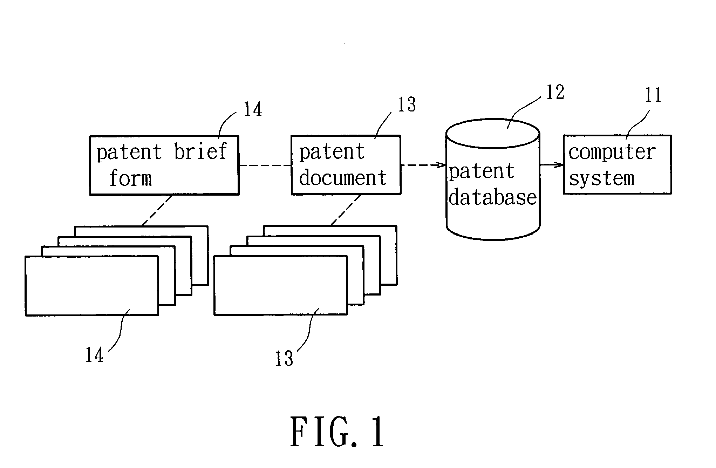

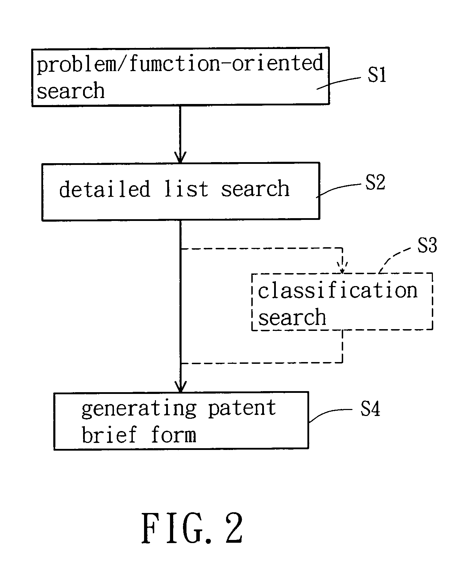

Referring now to FIGS. 1 and 2, a searching method based on a problem/function-defined interface in accordance with the preferred embodiment of the present invention is implemented on a computer system 11 in which a patent database system 12 is built. The patent database system 12 includes a plurality of computer files of patent documents 13 and a plurality of computer files of patent brief forms 14 thereof which are previously stored in the patent database system 12. Preferably, the patent brief forms 14 may be classified by technical problems or functions, and the classified patent brief forms 14 may be stored in one or more of patent database systems. In this manner, the computer system 11 enables a user to perform a search query for easily receiving search results of the patent brief forms 14 depending upon a user-defined search term. Preferably, the patent document 13 may be selected from a patent specification or a patent publication bulletin. The contents of the patent documents 13 are summarized to form a series of the patent brief forms 14.

Referring particularly to FIG. 2, the problem/function-oriented searching method for the patent database system in accordance with the preferred embodiment of the present invention includes the steps of: step "S1" of problem/function-oriented search; step "S2" of detailed list search; step "S3" of classification search; and step "S4" of generating patent brief form of search results.

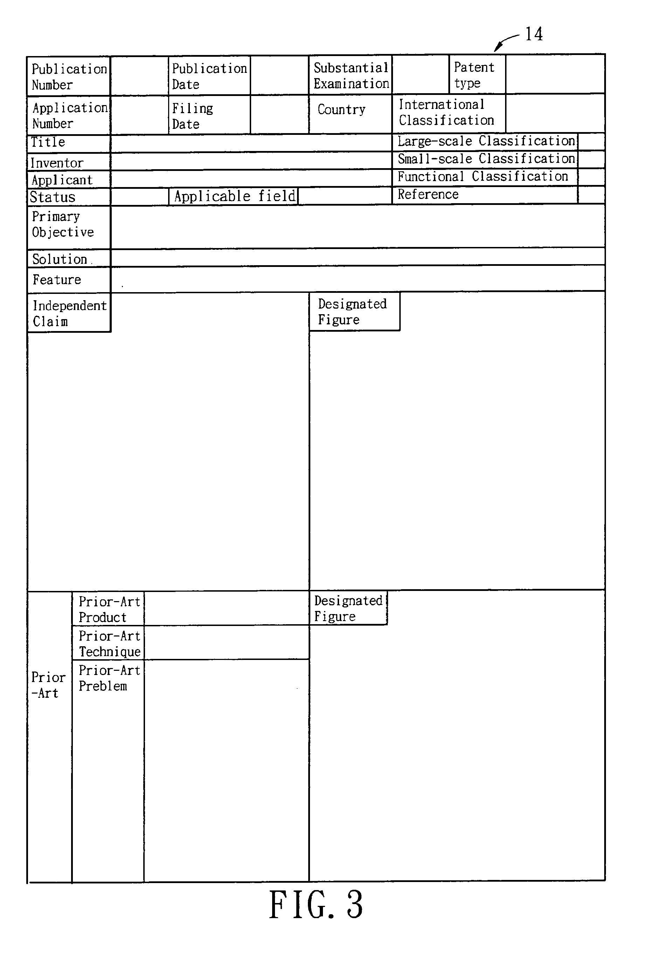

Referring now to FIGS. 1 and 3, the contents of the patent documents 13 are simplified to construct the patent brief forms 14 by analysis computer programs operated by well-experienced staffs. Each of the patent brief forms 14 is preferably corresponding to each of the patent documents 13, and includes at least one application data column, at least one problem/function-oriented column and at least one full-text hyperlink block. The application data column may be selected from one of a publication number column, a title column and an application number column. The problem/function-oriented column may be selected from one of a functional classification column, a primary objective column, a technical solution column and a technical feature column so that a user can rapidly interpret the technical function and the solution for the problem. Preferably, the full-text hyperlink block includes a hyperlink so that a user can click the hyperlink to link a computer file of the patent document corresponding to the designated patent brief form.

With continued reference to FIG. 3, each of the patent brief forms 14 may include a publication date column, a substantial examination column, a patent type column, an international classification column, a filing date column, a country column, an applicant column or an applicable field column for example. Each of the patent brief forms 14 further includes a prior-art summary column, a designated prior-art drawing column, an prior-art-embodiment column and a prior-art-claim column so that the user can easily discriminate between the prior art disclosed in the patent brief form 14 and the claimed invention of the patent document 13. Furthermore, the patent brief form 14 includes a product hyperlink block and an industrial hyperlink block. The product hyperlink block can link a product list or an object relevant to the search results. Furthermore, the industrial hyperlink block can further link a technical, industrial, commercial, marketing, product-ordering/supplying or inventory database relevant to the search results. Preferably, the patent brief form 14 further includes a database classification column which includes at least one large-scale classification column and at least one small-scale classification column which can precisely link the patent brief form 14 to serial classified orders of the patent database system 12.

Referring now to FIGS. 1, 2 and 4, the problem/function-oriented searching method in accordance with the preferred embodiment of the present invention includes the step "S1" of problem/function-oriented search. Prior to the step "S1", the step of arranging the computer system 11 and the patent database system 12 may be executed or omitted in the preferred embodiment of the present invention. A user can utilize the computer system 11 to access a designated problem/function-defined search interface 2. The user can execute the step "S1" of problem/function-oriented search by directly operating the computer system 11. Alternatively, the user can execute the step "S1" by indirectly operating the computer system 11 via LAN (Local Area Network), Internet or a mobile telecommunication system. Preferably, the problem/function-defined search interface 2 includes at least one first hyperlink block 21 which includes a plurality of query sections appearing in the form of descriptive characters or element patterns. For example, the query sections can be designed for "functional classification", "technical solution", "primary objective" or "technical feature" of patents pertaining to some technical fields. Preferably, the first hyperlink block 21 is constructed from one of dropdownlist window 211 or keyword-entering window 212. The user can operated the computer system 11 to link and access the patent database system 12 so as to obtain a number of the patent brief forms 14 relating to one of the query sections if the first hyperlink block 21 is clicked. Subsequently, the problem/function-oriented searching method can execute the next step "S2" of detailed list search. In step "S1", with continued reference to FIGS. 1, 2 and 4, the user can enter a query condition of technical problems or functions into the computer system 11 or the patent database system 12 to access the problem/function-defined search interface 2 in conducting a search query relating to a fan motor field, for example. In a preferred embodiment, the user can employ a mouse or the like of the computer system 11 to click one element in a graphical hyperlink block in accessing the problem/function-defined search interface 2. One of the graphical hyperlink blocks is described in a U.S. patent application serial No. 11/449,732, entitled "Searching Method for a Patent Database System and Generating a Brief Form of Search Results," which is owned by the assignee to the present invention, and is hereby incorporated by reference in its entirety. In another preferred embodiment, the user can employ a desired keyword (or a desired piece of undocumented or unstructured information) into the patent database system 12 to access the problem/function-defined search interface 2. For instance, the user can directly or indirectly operate the computer system 11 and enter a key word of "fan motor" therein for accessing the problem/function-defined search interface 2. In attempting to conduct a search in a rotational balancing function of the fan motor field, the user can employ a cursor tool 5 (controlled by mouse, keyboard or touch panel) to process a click action on the dropdownlist window 211 of the first hyperlink block 21 of the problem/function-defined search interface 2. The dropdownlist window 211 can automatically display a plurality of problem/function query sections relating to the fan motor field. Alternatively, the user can enter various keywords in the keyword-entering window 212. The computer system 11 can retrieve a set of the patent brief forms 14 according to the user selecting one of the problem/function query sections of the dropdownlist window 211 or entering a keyword in the keyword-entering window 212. In an alternative embodiment, the user can select one of the problem/function query sections of the dropdownlist window 211 and enter a keyword in the keyword-entering window 212 at the same time for more precisely retrieving the patent brief forms 14.

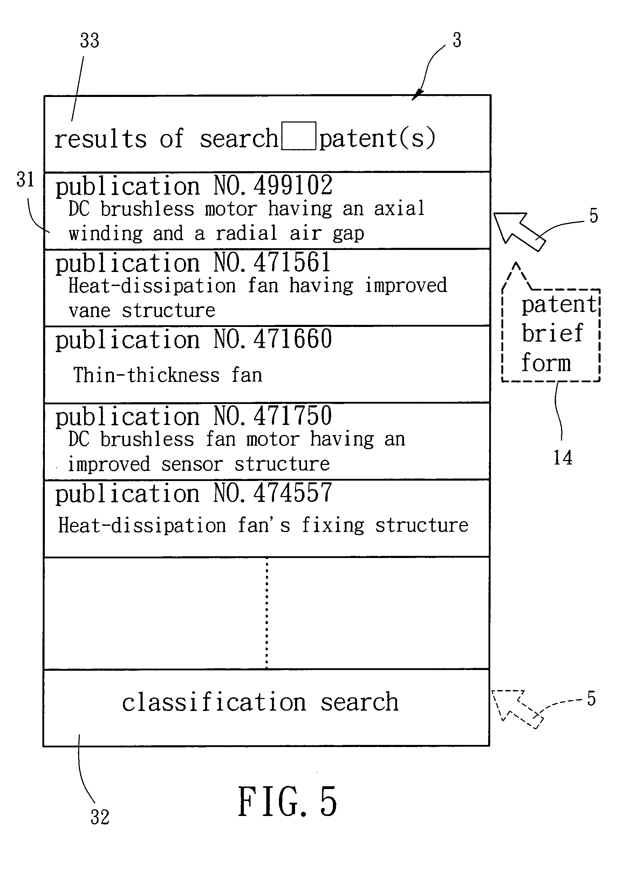

Referring now to FIGS. 1, 2 and 5, the problem/function-oriented searching method in accordance with the preferred embodiment of the present invention includes the step "S2" of detailed list search. In step "S2", the computer system 11 can process results of the patent brief forms 14 retrieved from executing step "S1" by employing a detailed list interface 3. The detailed list interface 3 includes at least one second hyperlink block 31, at least one third hyperlink block 32 and a results-of-search column 33. The second hyperlink block 31 includes a plurality of representative sections appearing in the form of descriptive characters or element patterns. Preferably, the representative section displays one of the publication number column, the title column and the application number column of the patent brief form 14. The third hyperlink block 32 includes a next-page block appearing in the form of descriptive characters or element patterns. The results-of-search column 33 is used to display the number of the representative sections of the patent brief forms 14 according to the results of search such that the user can estimate the number of the patent brief forms 14 matching for the user-defined search. The user can directly select one of the representative sections if the number of the patent brief forms 14 matching for the user-defined search is acceptable. Once one of the representative sections is selected and clicked, the computer system 11 can automatically link to the corresponding patent brief form 14, so as to subsequently process another step "S4" of generating patent brief form. To further reduce the number of the representative sections of the patent brief forms 14, the user can select the third hyperlink block 32 so as to subsequently process the step "S3" of classification search of the present invention prior to step "S4".

With continued reference to FIGS. 1, 2 and 5, when accessing the detailed list interface 3 by designating the query condition of rotational balancing function, the user can review and search each information appearing on the representative sections listed in the detailed list interface 3. Next, the user can employs the cursor tool 5 to directly select one or more of the representative sections to process the step "S4" for generating the corresponding patent brief form(s) 14 if desired. However, the user can further reduce the scope of the user-defined search by executing the step "S3" of the present invention if a number of the representative sections (i.e. patent brief forms 14) are listed in the detailed list interface 3 by referring to the number displayed in the results-of-search column 33 of the detailed list interface 3. As discussed above, the user can omit or execute the step "S3" of classification search depending on the results of search generated in executing the step "S2".

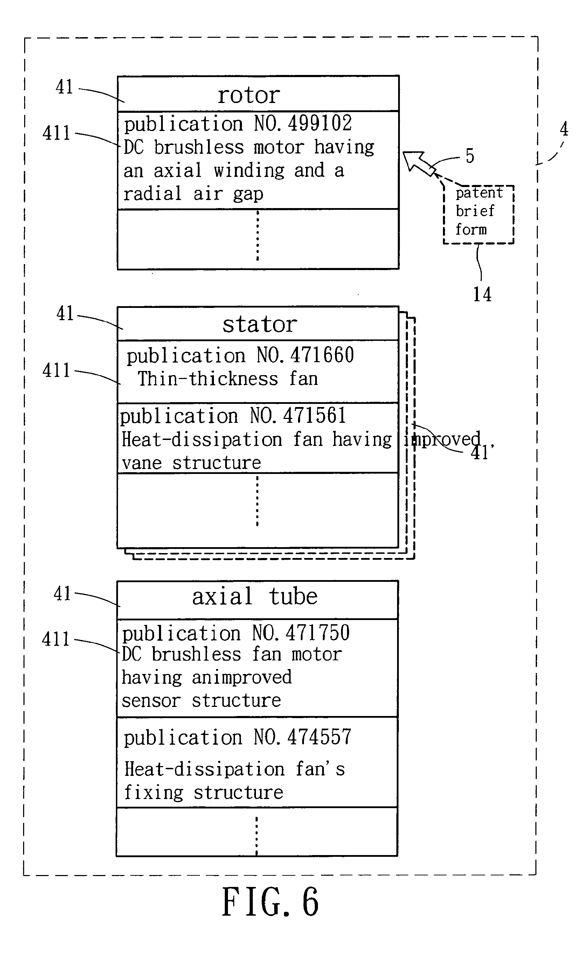

Referring now to FIGS. 1, 2 and 5 to 6, the problem/function-oriented searching method in accordance with the preferred embodiment of the present invention includes the step "S3" of classification search. The user accesses a classification list interface 4 to further reduce the scope of the user-defined search as well as the number of the patent brief forms 14 listed in the detailed list interface 3. The classification list interface 4 includes at least one element-name classification list 41. The element-name classification list 41 is used to further redefine (classify) the results of search previously defined by way of the problem/function-defined search in the step "S2", with employing element names of the technical field. Each of the element-name classification lists 41 includes at least one fourth hyperlink block 411 appearing in the form of descriptive characters or element patterns. Preferably, the fourth hyperlink block 411 displays one of the publication number column, the title column and the application number column of the patent brief form 14. Once one of the fourth hyperlink blocks 411 is selected and clicked, the computer system 11 can automatically link to the corresponding patent brief form 14, so as to subsequently process the next step "S4" of generating patent brief form. In a preferred embodiment, the user can further access the classification list interface 4 to reclassify the results of search listed in the element-name classification lists 41 to receive one or more of advanced element-name classification lists 41' if desired. In this manner, the user can be successful in reducing the scope of the user-defined search. For instance, the classification list interface 4 is accessed again to reclassify the results of search relating rotors listed in the element-name classification list 41, and thus to generate a series of the advanced element-name classification lists relating to inner rotors, outer rotors or other rotor types.

In step "S3", with continued reference to FIGS. 1, 2 and 6, when the user is successful in accessing the classification list interface 4, there provides the element-name classification lists 41 listed in the classification list interface 4 relating to the conditions of rotational balancing function and motor components, including the element-name classification lists 41 of rotors, stators or axial tubes for example. If the results of search are further limited to the rotor in reducing the scope of the user-defined search, the user can selectively review each of the fourth hyperlink blocks 411 of the element-name classification lists 41 designated to rotors. Accordingly, the user can select one of the fourth hyperlink blocks 411 to automatically link the corresponding patent brief form 14, so as to process the next step "S4" of generating patent brief form.

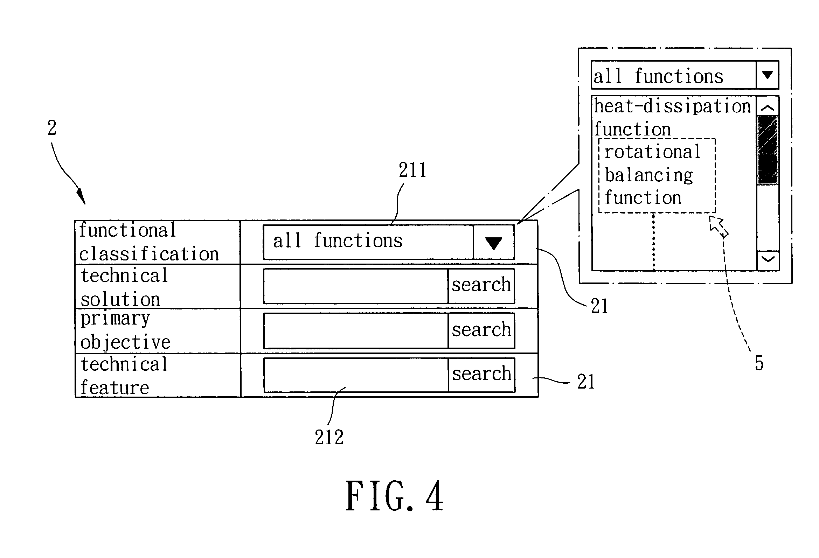

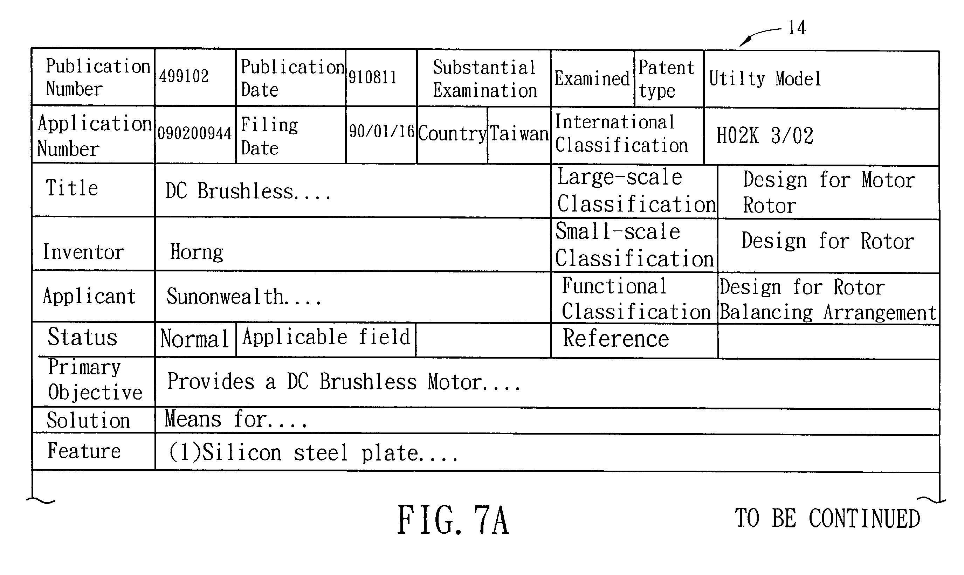

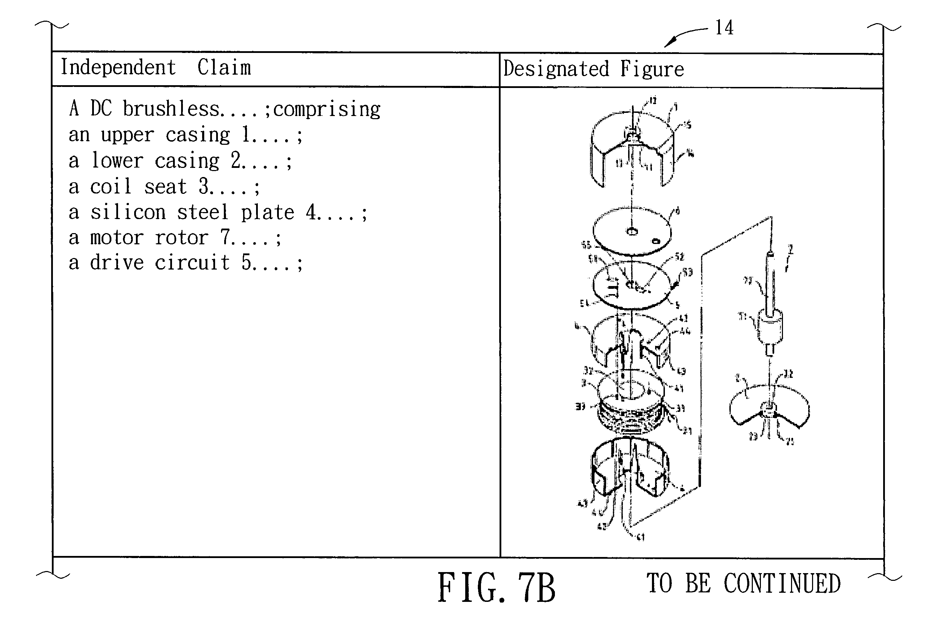

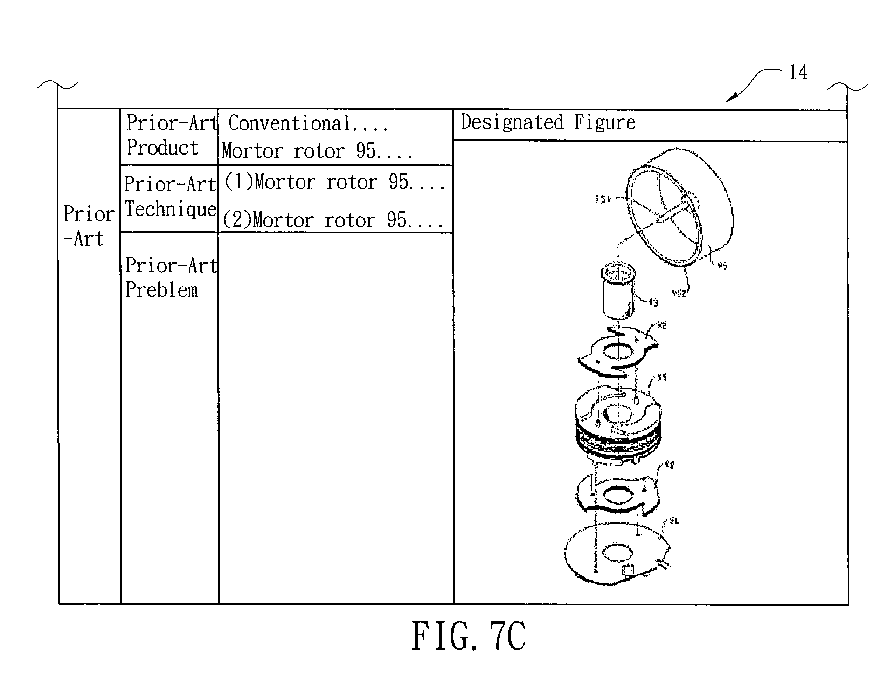

Referring now to FIGS. 1, 2 and 7A-7C, the problem/function-oriented searching method in accordance with the preferred embodiment of the present invention includes the step "S4" of generating patent brief form. The computer system 11 can generate the results of final search including one or more of the patent brief forms 14 which match for the user-defined search while executing the step "S4". The computer system 11 can automatically generate the patent brief forms 14 by selecting one of the representative sections of the second hyperlink block 31 in step "S3" or one of the fourth hyperlink blocks 411 of the element-name classification lists 41 in step "S4". In this preferred embodiment, the results of final search of the patent brief forms 14 relate to the conditions of "rotational balancing function" and "rotor", thereby generating a patent brief form 14 of Pub. No. 499102 for example, as best shown in FIG. 7A-7C. Preferably, the patent brief form 14 provides at least one problem/function-oriented column, selecting from one of a functional classification column, a primary objective column, a technical solution column and a technical feature column which may include a hyperlink to link another brief form. Accordingly, the user can employ the cursor tool 5 to point and click one of the problem/function-oriented columns for returning to the step "S1" and repeatedly accessing the problem/function-defined search interface 2, as best shown in FIG. 4. The patent brief form 14 may be designed to link to other patent brief forms 14.

As has been discussed above, the conventional patent database system and searching methods thereof require users to enter keywords or pieces of information of predetermined technical terms. Furthermore, the search results retrieved from these patent database systems are always raw data that are not simplified and cannot meet the user-defined search. The user cannot conduct a problem/function-oriented search on the conventional patent database system. Conversely, the searching method in accordance with the present invention includes the step "S1" of problem/function-oriented search for accessing the problem/function-defined search interface 2, and the step "S2" of detailed list search for accessing the detailed list interface 3. Accordingly, the user can conduct the search by using the conditions of technical problems and functions. Consequently, it would be advantage to employ the object patterns in the searching method for the patent database, thereby achieving the users' convenience for data search, increasing accuracies for the destination of the search results, and reducing a searching time of the users.

Although the invention has been described in detail with reference to its presently preferred embodiment, it will be understood by one of ordinary skill in the art that various modifications can be made without departing from the spirit and the scope of the invention, as set forth in the appended claims.

## Claims

1. A searching method for a patent database system, said patent database system provided in a computer system and provided with a plurality of patent brief files, comprising the steps of:
operating the computer system to access a problem/function-defined search interface to select at least one first hyperlink block which includes a plurality of problem/function query sections, and to sift the patent brief forms relating to the selected problem/function sections;
accessing a detailed list interface depending upon results sifted from the problem/function query sections, so as to select at least one of second hyperlink block which includes a plurality of representative sections; and
generating search results of the patent brief forms.

2. The searching method for a patent database system as defined in claim 1, wherein the patent brief form includes at least one application data column, and at least one problem/function-oriented column which includes a hyperlink to link another brief form.

3. The searching method for a patent database system as defined in claim 2, wherein the problem/function-oriented column is selected from the group consisting of a functional classification column, a primary objective column, a technical solution column and a technical feature column.

4. The searching method for a patent database system as defined in claim 1, wherein the patent brief form includes at least one application data column, and at least one problem/function-oriented column which includes a hyperlink to repeatedly access the problem/function-defined search interface.

5. The searching method for a patent database system as defined in claim 4, wherein the problem/function-oriented column is selected from the group consisting of a functional classification column, a primary objective column, a technical solution column and a technical feature column.

6. The searching method for a patent database system as defined in claim 1, further comprising the step of: providing the patent brief forms in a patent database system, wherein the patent brief form includes at least one full-text hyperlink block to link a computer file of a patent document.

7. The searching method for a patent database system as defined in claim 1, wherein the first hyperlink block of the problem/function-defined search interface is constructed from a dropdownlist window or a keyword-entering window, and wherein the dropdownlist window displays a plurality of problem/function query sections.

8. The searching method for a patent database system as defined in claim 7, wherein the patent brief forms are retrieved by selecting one of the problem/function query sections of the dropdownlist window or entering a keyword in the keyword-entering window.

9. The searching method for a patent database system as defined in claim 7, wherein the patent brief forms are retrieved by selecting one of the problem/function query sections of the dropdownlist window and entering a keyword in the keyword-entering window at the same time.

10. The searching method for a patent database system as defined in claim 1, wherein the classified patent brief forms are stored in the patent database systems.

11. The searching method for a patent database system as defined in claim 1, wherein the computer system is used to access the problem/function-defined search interface.

12. The searching method for a patent database system as defined in claim 11, wherein the problem/function-defined search interface is accessed by entering a query condition of technical problems or functions into the computer system.

13. The searching method for a patent database system as defined in claim 11, wherein the problem/function-defined search interface is accessed by selecting one element in a graphical hyperlink block in the computer system.

14. The searching method for a patent database system as defined in claim 1, wherein the detailed list interface includes a results-of-search column to display the number of representative sections of the patent brief forms.

15. The searching method for a patent database system as defined in claim 1, wherein the computer system is directly controlled to execute the searching method.

16. The searching method for a patent database system as defined in claim 1, wherein the computer system is controlled via LAN (Local Area Network), Internet or a mobile telecommunication system.

17. The searching method for a patent database system as defined in claim 1, wherein the patent brief form includes a publication date column, a substantial examination column, a patent type column, an international classification column, a filing date column, a country column, an inventor column, an applicant column and an applicable field column.

18. The searching method for a patent database system as defined in claim 1, wherein the patent brief form includes a prior-art summary column, a designated prior-art drawing column, an prior-art-embodiment column and a prior-art-claim column.

19. The searching method for a patent database system as defined in claim 1, wherein the paten brief form further includes a product hyperlink block and an industrial hyperlink block.

20. The searching method for a patent database system as defined in claim 1, wherein the patent brief form further includes at least one database classification column that precisely links the patent brief form to serial classified orders of the patent database system.

21. A searching method for a patent database system, said patent database system provided in a computer system and provided with a plurality of patent brief files, comprising the steps of:
operating the computer system to access a problem/function-defined search interface to select at least one first hyperlink block which includes a plurality of problem/function query sections, and to sift the patent brief forms relating to the selected problem/function sections;
accessing a detailed list interface depending upon results sifted from the problem/function query sections, so as to select at least one of third hyperlink block to link a classification list interface; and
selecting at least one fourth hyperlink block of an element-name classification list of the classification list interface to generate search results of the patent brief forms.

22. The searching method for a patent database system as defined in claim 21, wherein reclassifying results of search listed in the element-name classification lists to receive one or more of advanced element-name classification lists.

23. The searching method for a patent database system as defined in claim 21, wherein the patent brief form includes at least one application data column, and at least one problem/function-oriented column which includes a hyperlink to link another brief form.

24. The searching method for a patent database system as defined in claim 23, wherein the problem/function-oriented column is selected from the group consisting of a functional classification column, a primary objective column, a technical solution column and a technical feature column.

25. The searching method for a patent database system as defined in claim 21, wherein the patent brief form includes at least one application data column, and at least one problem/function-oriented column which includes a hyperlink to repeatedly access the problem/function-defined search interface.

26. The searching method for a patent database system as defined in claim 25, wherein the problem/function-oriented column is selected from the group consisting of a functional classification column, a primary objective column, a technical solution column and a technical feature column.

27. The searching method for a patent database system as defined in claim 21, further comprising the step of: providing the patent brief forms in a patent database system, wherein the patent brief form includes at least one full-text hyperlink block to link a computer file of a patent document.

28. The searching method for a patent database system as defined in claim 21, wherein the first hyperlink block of the problem/function-defined search interface is constructed from a dropdownlist window or a keyword-entering window, and wherein the dropdownlist window displays a plurality of problem/function query sections.

29. The searching method for a patent database system as defined in claim 21, wherein the classified patent brief forms are stored in the patent database systems.

30. The searching method for a patent database system as defined in claim 21, wherein the computer system is used to access the problem/function-defined search interface.

31. The searching method for a patent database system as defined in claim 11, wherein the problem/function-defined search interface is accessed by entering a query condition of technical problems or functions into the computer system.

32. The searching method for a patent database system as defined in claim 30, wherein the problem/function-defined search interface is accessed by selecting one element in a graphical hyperlink block in the computer system.

33. The searching method for a patent database system as defined in claim 21, wherein the detailed list interface includes a results-of-search column to display the number of representative sections of the patent brief forms.

## Amended claims

### Amended claims in accordance with Rule 137(2) EPC.

**1.** A searching method for a patent database system (12), said patent database system (12) provided in a computer system (11) and provided with a plurality of patent brief forms (14), comprising the steps of:
Step S1: operating the computer system (11) to access a problem/function-defined search interface (2) to select at least one first hyperlink block (21) which includes a plurality of problem/function query sections, and to sift the patent brief forms (14) relating to the selected problem/function sections;
wherein the said problem/function query sections can be designed for a functional classification, a technical solution, a primary objective or a technical feature of patents pertaining to some technical fields; wherein said patent brief form (14) includes at least one application data column, and at least one problem/function-oriented column; wherein said problem/function-oriented column is selected from the group consisting of a functional classification column, a primary objective column, a technical solution column and a technical feature column.
Step S2: accessing a detailed list interface (3) depending upon results sifted from the problem/function query sections, so as to select at least one of second hyperlink block (31) which includes a plurality of representative sections; and
Step S3: generating search results of the patent brief forms (14).

**2.** The searching method for a patent database system (12) as defined in claim 1, wherein the said detailed list interface (3) includes at least one of third hyperlink block (32) to link a classification list interface (4); and
selecting at least one fourth hyperlink block (411) of an element-name classification list (41) of the classification list interface (4) to generate search results of the patent brief forms (14).

**3.** The searching method for a patent database system (12) as defined in claim 1 and claim 2, further comprising the step of: providing the patent brief forms (14) in a patent database system (12), wherein the patent brief form (14) includes at least one full-text hyperlink block to link a computer file of a patent document (13).

**4.** The searching method for a patent database system (12) as defined in claim 1 and claim 2, wherein the first hyperlink block (21) of the problem/function-defined search interface (2) is constructed from a dropdownlist window (211) or a keyword-entering window (212), and wherein the dropdownlist window (211) displays a plurality of problem/function query sections.

**5.** The searching method for a patent database system (12) as defined in claim 4, wherein the patent brief forms (14) are retrieved by selecting one of the problem/function query sections of the dropdownlist window (211) or entering a keyword in the keyword-entering window (212).

**6.** The searching method for a patent database system (12) as defined in claim 4, wherein the patent brief forms (14) are retrieved by selecting one of the problem/function query sections of the dropdownlist window (211) and entering a keyword in the keyword-entering window (212) at the same time.

**7.** The searching method for a patent database system (12) as defined in claim 1 and claim 2, wherein the classified patent brief forms are stored in the patent database systems (12).

**8.** The searching method for a patent database system (12) as defined in claim 1 and claim 2, wherein the computer system is used to access the problem/function-defined search interface (2).

**9.** The searching method for a patent database system (12) as defined in claim 8, wherein the problem/function-defined search interface (2) is accessed by entering a query condition of technical problems or functions into the computer system (11).

**10.** The searching method for a patent database system (12) as defined in claim 8, wherein the problem/function-defined search interface (2) is accessed by selecting one element in a graphical hyperlink block in the computer system (11).

**11.** The searching method for a patent database system (12) as defined in claim 1 and claim 2, wherein the detailed list interface (3) includes a results-of-search column (33) to display the number of representative sections of the patent brief forms (14).

**12.** The searching method for a patent database system (12) as defined in claim 1, wherein the computer system (11) is directly controlled to execute the searching method.

**13.** The searching method for a patent database system (12) as defined in claim 1, wherein the computer system (11) is controlled via LAN (Local Area Network), Internet or a mobile telecommunication system.

**14.** The searching method for a patent database system (12) as defined in claim 1, wherein the patent brief form (14) includes a publication date column, a substantial examination column, a patent type column, an international classification column, a filing date column, a country column, an inventor column, an applicant column and an applicable field column.

**15.** The searching method for a patent database system (12) as defined in claim 1, wherein the patent brief form (14) includes a prior-art summary column, a designated prior-art drawing column, an prior-art-embodiment column and a prior-art-claim column.

**16.** The searching method for a patent database system (12) as defined in claim 1, wherein the patent brief form (14) further includes a product hyperlink block and an industrial hyperlink block.

**17.** The searching method for a patent database system (12) as defined in claim 1, wherein the patent brief form (14) further includes at least one database classification column that precisely links the patent brief form (14) to serial classified orders of the patent database system (12).
